# EUROPEAN PATENT APPLICATION

(11) **EP 2 361 953 A1**
(43) Date of publication of application: **31.08.2011**
(21) Application number: 11154953.1
(22) Date of filing: 18.02.2011
(51) Int. Cl.: C09C 1/00

(54) **Gold colored metallic pigments that include manganese oxide nanoparticles layers**

(30) Priority: 18.02.2010 US 708154
(71) Applicant: Silberline Manufacturing Co., Inc., Tamaqua PA 18252-0420 (US)
(72) Inventor: Wang, Wei, Whitehall, PA 18052 (US); Lin, Hai Hui, Naperville, IL 60564 (US); Likibi, Parfait Jean Marie, Mount Pleasant, SC 29466 (US)
(74) Representative: Hart-Davis, Jason

(57) **Abstract**

A gold color metallic pigment with coating of manganese oxide nanoparticles and a method to produce the gold color pigment are described. The disclosed coated pigment includes a platelet shaped substrate, a passivation layer applied to the substrate with surface anchoring groups and a manganese oxide nanoparticles layer. The coated pigment further includes an encapsulation layer or a surface property modification layer. The disclosed method provides pigments that exhibit brilliant gold color and a highly desirable appearance of real gold without the environmental issues causing by heavy metals.

## Description

### FIELD

This disclosure relates generally to a coated pigment, and particularly, to the design of a coated pigment that is metallic and gold in color, and includes manganese oxide nanoparticles.

### BACKGROUND

Metallic pigments or metallic effect pigments are platelet shaped metal particles having thicknesses of less than 1 µm and diameters anywhere from a few microns to 100 µm. Metallic pigments are commonly used in the art to introduce metallic effects to a wide range of products such as paints, coating, inks, and plastics coating and mass coloration. One property of the metallic pigments is that they tend to orient in parallel to the surface during application due to their high aspect ratios. The metallic effect is therefore generated by the reflection of light on the surface of the pigments. Such metallic pigments are prepared by either milling of atomized metal powders or Physical Vapor Deposition (PVD). Commonly used metals in such processes include aluminum for silver coloration, and bronze (an alloy of copper and zinc) for gold effects. The shade of the gold effects can be controlled, for example, by varying the copper to zinc ratio and by heat treatment.

Bronze pigments as gold color metallic pigments suffer several disadvantages when incorporated in application media. For example, the specific gravity of bronze pigments is quite high (around 8.4-8.8 g/cm³ depending on the copper/zinc ratio), and is about three times higher than that of aluminum pigments. As a result, high concentrations, often over 40%, are required for adequate opacity and metallic effect. Because of their high specific gravity, bronze pigments tend to settle quickly in liquid application media having low viscosity. This is particularly disadvantageous when used in printing inks, since these inks must be frequently agitated to ensure color consistency.

Bronze metallic pigments are also prone to "tarnish" due to the oxidation of copper and zinc, which is accelerated with the off moisture and acid/base conditions. The resulting free copper and zinc ions can then participate in other undesirable side reactions with resin polymers, causing the change of viscosity and the loss of metallic luster.

Various passivation processes have been developed to stabilize bronze pigments, including organo-phosphorous additives and sol-gel silica coating. However, such processes have not adequately addressed the tarnish issue.

Perhaps one of the more serious issues with using bronze pigments is the health and safety concerns due to their copper content. Industrial exposure to copper fumes, dusts, or mists for example may result in metal fume fever with atrophic changes in nasal mucous membranes. Chronic copper poisoning can result in the development of Wilson's disease, which is characterized by hepatic cirrhosis, brain damage, demyelination, renal disease, and copper deposition in the cornea.

Coloring or tinting aluminum metallic pigments has been a well known alternative practice to generate gold color metallic effect. Such pigments can be produced by simply mixing inorganic and/or organic yellow pigments or dyes with aluminum flakes. In coating applications, transparent metal oxide pigments can be used in either a clear coat alone or a base coat with aluminum pigments. Although such methods of producing gold color metallic pigments are simple, these methods suffer a major drawback: the yellow pigments separate from the aluminum flakes, and this results in color inconsistencies during application. Moreover, in order to create an acceptable gold color effect, multiple color pigments have to be carefully formulated and the loading of color pigments particles usually needs to be high. As a result, the color pigments scatter light and cause diminishing of metallic luster.

Two major technologies have been developed to directly attach color particles or coating onto aluminum flakes via physical or chemical routes. One of the approaches involves encapsulating color pigment particles onto aluminum flakes by transparent sol-gel ceramic coating or polymer coating. This method allows all colors to be produced, and examples of products produced from this approach include charged polymer encapsulated pigments (US patent 5,814,686), unsaturated carboxylic acid coated flakes (US patent 5,037,475), inorganic acid radical coated flakes and amine functionalized pigments, which are then polymerized with acrylate monomers (EP patent 0,810,270), sol-gel silica (US patent 5,931,996) and wax (US patent 5,558,705). The major disadvantage of this method is that the attached color pigment particles tend to be stripped off from the aluminum flake surface by solvent or shear. Moreover, the loading efficiency of color pigments onto aluminum flakes is relatively low. Therefore, this method results in products with low color intensity.

The other approach involves coating aluminum flakes with a colored, transparent or semi-transparent layer with high reflective index (n>2). The color effect in this case is from a combination of reflection of aluminum substrate, absorption and interference of the coating layer. Two examples are Aloxal® (US patent 5,964,936) and Paliocrom® (US patent 5,624,484).

Aloxal® is a control oxidized aluminum pigment, with the aluminum oxide/hydroxide layer being formed by control oxidation of the aluminum pigment in aqueous alkali solution. This gives a champagne color appearance to the aluminum flakes. However, true gold color is not achievable by this method.

Paliocrom® is an aluminum flake coated with iron oxide by a chemical vapor deposition (CVD) process. The coated pigments exhibit a range of brilliant, intensely colored gold and orange shades depending on the thickness of the iron oxide layer. The color is a combination of absorption color of iron oxide (red brownish) and interference color (reflective index of iron oxide is about 3.0). However, due to the natural redness of iron oxide, it is not possible to achieve true gold color. Moreover, the CVD process requires an expensive setup. Also, this process has raised considerable safety concerns because of the pyrotechnic nature of the combination of aluminum and iron oxide (thermite).

Efforts have been made to develop new technology for gold color metallic pigments based on aluminum flakes with true gold color that is stable and without the environmental concerns causing by heavy metals. For example, US patent 3,067,052 discloses a method of depositing manganese oxide onto bare aluminum powder in aqueous alkali metal permanganate solution. However, although gold color can be obtained, the redox reaction between aluminum and permanganate ions results in the release of hydrogen gas and heat, which makes this process unsuitable for industrial scale production. Moreover, the reaction causes rapid corrosion of the aluminum flakes, thereby resulting in the loss of metallic luster. EP patent application 0,806,457 discloses the use of a silica layer to passivate the aluminum flakes first and a manganese oxide layer to create gold color metallic pigment. However, there is no specific binding between manganese oxide layer and silica layer, so that the color layer can be easily washed out, thereby resulting in the loss of the gold color.

### SUMMARY

A gold color metallic pigment with coating of manganese oxide nanoparticles and a method to produce the gold color pigment are described. In one embodiment, the disclosed coated pigment includes a platelet shaped metallic reflector core, a passivation layer applied to the reflector core with surface anchoring groups and a manganese oxide nanoparticles layer. In another embodiment, the disclosed coated pigment further includes an encapsulation layer or a surface property modification layer.

In some examples, the passivation layer can include sol-gel metal oxide or mixed sol-gel metal oxides. In other examples, the passivation layer can include an inorganic and/or organic hybrid layer, or a polymer layer. In another example, the surface anchoring group to which the passivation layer is applied is a functional group with affinity to colored nanoparticles. In one instance, the functional group is an amine moiety.

In other examples, the encapsulation layer is a sol-gel metal oxide or polymer layer. The encapsulation layer can be further surface functionalized to modify their surface property.

In one embodiment of the disclosed method, the manganese oxide nanoparticles are synthesized by in-situ redox reaction between alkali metal permanganate aqueous solution and alcohols at room temperature. The resulting manganese oxide nanoparticles are then attached onto substrates by amine anchoring groups. In another embodiment, the deposited manganese oxide nanoparticles can be further fused into a continuous coating layer by heat treatment.

The disclosed method provides pigments that exhibit brilliant gold color, and can be easily modified to achieve pigments with various shades of the gold color. Unlike other multilayer effect pigments that are known in the art, the gold color of the disclosed coated pigment is not shifted greatly with a viewing angle. This feature thus provides a highly desirable appearance of real gold. Moreover, since the disclosed coated pigment does not include heavy metals such as copper and zinc, tarnish and environmental issues can be avoided.

The coated pigment described herein can be applied in various systems where a gold color metallic effect is desired, including, but not limited to, paints, varnishes, printing inks, including security printing inks, plastics, ceramic materials and cosmetic formulations. Moreover, the disclosed pigments can be used as dopants in the laser marking of plastics.

### BRIEF OF THE DRAWINGS

Figs. 1A to 1F are schematic representations of embodiments of the disclosed coated pigments.
Fig. 2A is a scanning electron microscopy (SEM) image of a corner of one of the MnO₂ nanoparticles coated aluminum flakes before heat treatment (magnification of ×25K).
Fig. 2B is a scanning electron microscopy (SEM) images of a plurality of MnO₂ nanoparticles coated aluminum flakes before heat treatment (magnification of ×1.5K).
Fig. 3 is a transmitting electron microscopy (TEM) image of MnO₂ nanoparticles coated aluminum flakes (magnification of ×100K).
Fig. 4A is an SEM image of a corner of one of the heat treated MnO₂ nanoparticles coated aluminum flakes (magnification of ×90K).
Fig. 4B is an SEM image of a plurality of heat treated MnO₂ nanoparticles coated aluminum flakes (magnification of ×15K).
Fig. 5 is a TEM image of heat treated MnO₂ nanoparticles coated aluminum flakes (magnification of ×100K).

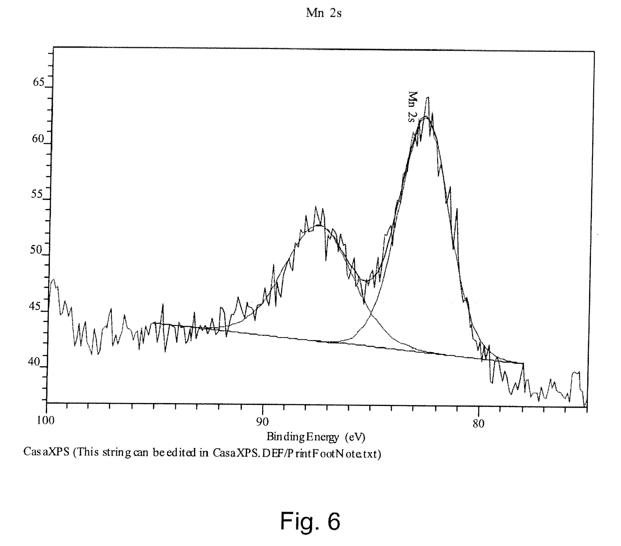

Fig. 6 is an X-ray photoelectron spectrum of MnO₂ nanoparticles coated aluminum flakes.

### DETAILED DESCRIPTION

A coated pigment including a substrate, a passivation layer, and a coating of manganese oxide nanoparticles and a method to produce the coated pigment are described. The disclosed coated pigment provides a brilliant gold metallic color without the use of heavy metals such as copper and zinc.

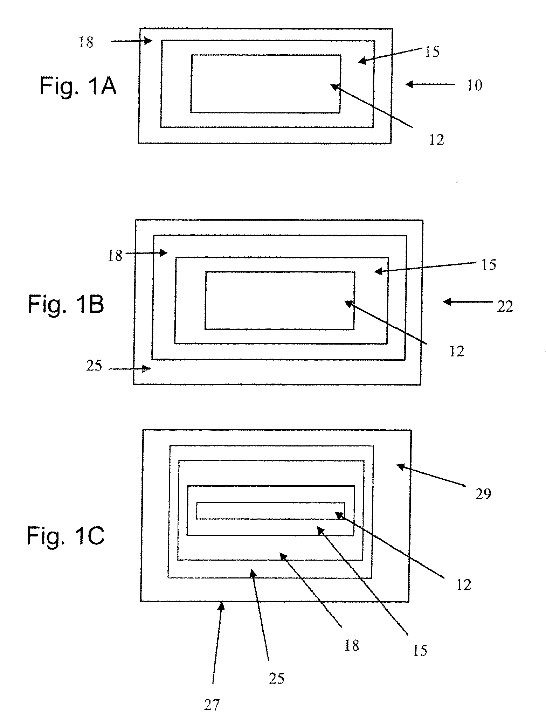

With reference to Fig. 1A, a coated pigment 10 includes a substrate 12. The substrate 12 can have a thickness of less than 5 µm. In another example, the thickness is less than 1 µm. In yet another example, the substrate 12 can have an average diameter from 1 µm to 500 µm. In yet another example, an average diameter ranges from 5 µm to 100 µm. The average diameter referred here is the D50 value measured via laser diffraction by means of suitable instruments. The diameter and thickness of individual flakes can be measured using, for example, SEM. In this instance, the diameter is measured as viewed in cross-sectional top view of the substrate 12, and the thickness is measured as viewed in cross-sectional side view of the substrate 12.

The materials of the substrate 12 can be any material suitable for forming a coated pigment including, but not limited to, an inorganic substrate. The material of the inorganic substrate 12 can be, but not limited to, platelet-shaped materials such as metal or metal alloy flakes, and non-metallic flakes. In one implementation, the platelet-shaped materials are metal or metal alloys. In this instance, the metal or metal alloys provide high hiding power to the coated pigment 10. The term 'hiding power' herein means the coverage of the surface to be coated by the coated pigments measured using an optical transmittance densitomer. The metal or metal alloys that can be utilized include at least one of aluminum, zinc, iron, titanium, chromium, nickel, cobalt or alloys thereof.

In one example, aluminum is used as the substrate 12. In one instance, the aluminum substrate provides the coated pigment 10 with a strong metallic luster. In this instance, the coated pigment 10 has a low density.

In one example, the metallic luster of the substrate 12 can be tuned by using a substrate with a different shape. In one instance, the shape of the substrate 12 plays a role in the aesthetics of the coated pigment 10, due to light scattering that results from the edges of the coated pigment 10. In this instance, the smoother the edges of the coated pigment 10, the brighter the coated pigment 10. In one implementation, the substrate 12 is an aluminum pigments that is one of "corn flakes", "silver dollars", and "vacuum metalized flakes (VMF)". The term "corn flakes" herein means milled aluminum flakes with irregular shapes. The term "silver dollars" herein means milled aluminum flakes with regular round shapes. The term "VMF" herein means extremely thin aluminum flakes prepared by Physical Vapor Deposition (PVD) process. In this example, by using a different type of aluminum flake, metallic luster of gold color nanoparticles coated pigments can be tuned.

In another example, stainless steel flakes are used as the substrate 12. In this example, substrate 12 has both excellent chemical resistance and metallic luster.

In another embodiment, the substrate 12 is a non-metallic platelet-shaped material. Examples of the non-metallic platelet-shaped material that can be used include mica, alumina flakes, borosilicate flakes and glass flakes.

In one implementation, the non-metallic platelet-shaped material included in the substrate 12 lacks hiding power, and is further coated with metal or metal oxide to provide hiding power to the substrate 12. In another implementation, the non-metallic platelet-shaped material included in the substrate 12 is further coated with metal or metal oxide to fine tune the color.

The substrate 12 is coated with a first layer 15. In one example, the first layer 15 is a passivation layer. In one instance, the passivation layer 15 improves the durability of the coated pigment 10 and its aesthetic effects. In one embodiment, the substrate 12 is a platelet-shaped material that is made of metal or metal alloys, and the substrate 12 is provided with the passivation layer 15. In this instance, the passivation layer 15 serves as a barrier and prevents water or other chemicals from reaching the metallic substrate 12 and thus enhances chemical stability of the coated pigment 10.

The passivation layer 15 can include, but is not limited to, metal oxides, mixed metal oxides, polymers, and/or hybrid polymer nanocomposites.

In one example, the passivation layer 15 includes polymers. In one instance, the passivation layer 15 provides an alternative to metal oxides within the passivation layer 15. In one implementation, the polymers within the passivation layer 15 allow the passivation layer 15 to be smooth and uniform and provide mechanical strength to the passivation layer 15. In this implementation, the passivation layer 15 provides superior aesthetics effect and passivation properties.

In another example, the passivation layer 15 includes hybrid nanocomposites. In this instance, the passivation layer 15 can include a hybrid inorganic and/or organic layer. In one example, the hybrid inorganic or organic layer 15 can include an inorganic network that has one or more metal oxide components and an organic component. In one example, the organic component is an organic oligomer and/or polymer which is covalently bonded to the inorganic network via one or more organic network formers. In one instance, tetraorthosilicate (TEOS) and bis-uresile silane are used to form the hybrid inorganic and organic hybrid layer by sol-gel method. In this example, the inorganic component is silica nanoparticles, and provides mechanical reinforcement. The organic component is urea groups of bis-ureasil structures and provides strong intermolecular hydrogen bonding, which results in excellent passivation properties.

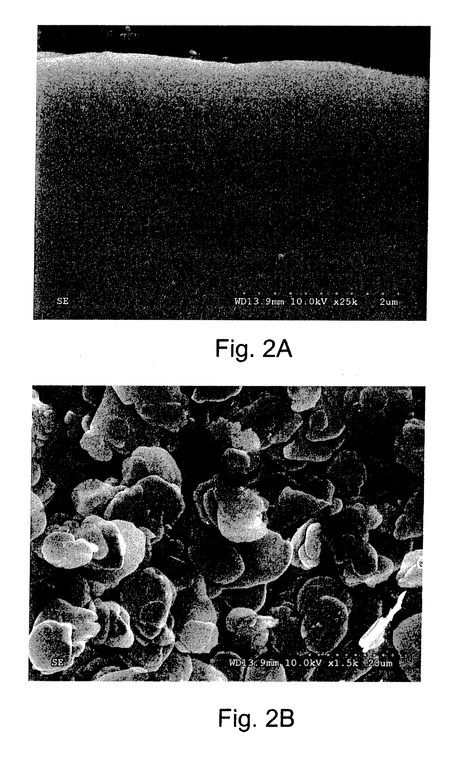

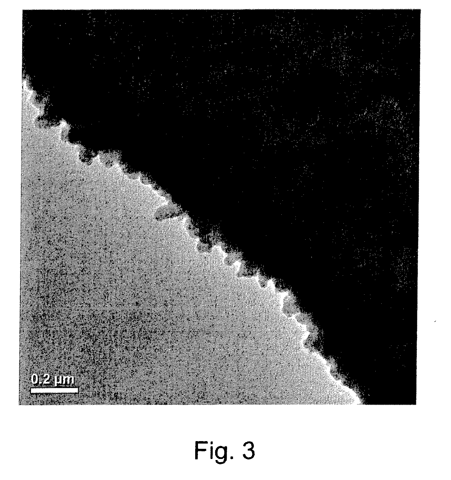

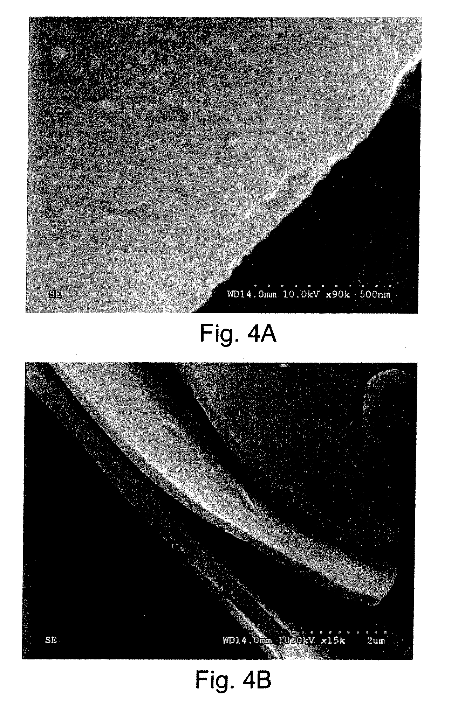

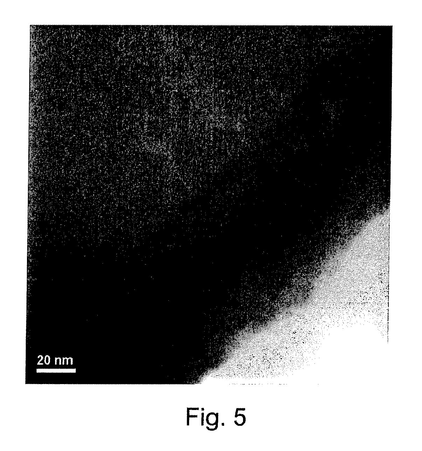

The first layer 15 is further coated with a second layer 18. In one example, the second layer 18 is a manganese oxide nanoparticles layer. In one instance, the manganese oxide nanoparticles layer includes manganese oxide nanoparticles. In one embodiment, the manganese oxide nanoparticles layer includes manganese oxide nanoparticle having particle size in a range from 10 to 100 nm. In another embodiment, the manganese oxide nanoparticles layer includes manganese oxide nanoparticle having particle size in a range from 40 to 60 nm. In one example, the manganese oxide nanoparticles layer 18 has a narrow distribution of manganese oxide nanoparticle size of 50±10nm (measured by TEM) and a uniform nanoparticle deposition as observed with SEM at a magnification of ×25K before heat treatment to fuse the nanoparticles. An example of a uniform nanoparticle deposition over a substrate as observed with SEM at a magnification of ×25K before heat treatment to fuse the nanoparticles is shown in Fig. 2A. As shown in Fig. 2A, little or no substrate is observed. Fig. 3 shows another view of the example shown in Fig. 2A (observed with TEM at a magnification of ×100K). An example of a uniform nanoparticle deposition over a substrate as observed with SEM at a magnification of x90K after heat treatment to fuse the nanoparticles is shown in Fig. 4A. Fig. 5 shows another view of the example shown in Fig. 4A (observed with TEM at a magnification of ×100K).

In one example, the manganese oxide nanoparticles are included in the range of 0.1 to 100% by weight based on the weight of the starting substrate. The term 'starting' herein means before the coating is applied onto the substrate. In another example, the amount of manganese oxide nanoparticles included is in the range of 1 to 50% by weight based on the weight of the starting substrate. In yet another example, the range is 1 to 30% by weight based on the weight of the starting substrate. In yet another example, the range is 1 to 20% by weight based on the weight of starting substrate.

In one embodiment, the manganese oxide nanoparticles are attached onto the surface of the first layer 15. In this embodiment, the manganese oxide nanoparticles are attached by anchoring groups that are present on the surface of the first layer 15. The anchoring groups utilized can be any functional groups that have physical and/or chemical affinity to colored nanoparticles. The anchoring groups include, but are not limited to, amine groups (including primary amine, secondary amine, tertiary amine, quaternary ammonium cation), phosphate esters, carboxylate groups, and conjugated molecules. Examples of the aminosilane that can be utilized include gamma-aminopropyl trimethoxysilane, gamma-aminopropyl triethoxysilane, N-(2-aminoethyl)-3-aminopropyltrimethoxysilane, gamma-(2-aminoethyl) aminopropylmethyldimethoxysilane, and the like which contains amino group in the chain and/or at the end of the chain.

In one example, the amount of the aminosilane included is in the range of 0.1 to 100% by weight based on the weight of the starting substrate. In another example, the amount of the aminosilane included is in the range of 1 to 50% by weight based on the weight of the starting substrate. In yet another example, the range is 1 to 20% by weight based on the weight of the starting substrate. In yet another example, the range is 1 to 10% by weight based on the weight of starting substrate.

With reference to Fig. 1B, in another embodiment, a coated pigment 22 includes the substrate 12, the first layer 12, the second layer 18 and a third layer 25. In this embodiment, the substrate 12 is coated with the first layer 15, the first layer 15 is coated with the second layer 18, and the second layer 18 is coated with the third layer 25. In one example, the third layer 25 is an encapsulation layer. In one instance, the encapsulation layer 25 includes the same components as that of the passivation layer 15. In this instance, the encapsulation layer 25 can function as a barrier to aid in the binding of the coloring nanoparticle to the surface of the first layer 15 or the substrate 12, as well as improving the chemical resistance of the coated pigment 22.

In another example, the third layer 25 is a surface property modification layer. In one example, the surface property modification layer includes a silane. In one instance, the silane is a fluorinated silane having a functional group bonded to a silicon atom, and the silane is covalently bonded to functional groups on the second layer 18. In one example, the surface property modification layer can be used to functionalize the surface in order to achieve optimized compatibility with a coating or ink resins. In one implementation, the silane used can be (tridecafluoro-1,1,2,2-tetrahydrooctyl)-trimethoxylsilane and/or dodecyl trimethoxylsilane to increase the surface hydrophobicity. In another polyalkyleneoxide alkoxysilane (Silquest A-1230) can be used to increase the surface hydrophilicity. In yet another example, a mixture of hydrophobic and hydrophilic silanes can be applied to further tune the surface properties according to solubility parameters matching.

In one implementation, the surface of the third layer 25 is modified by reacting the third layer 25 with a hydrolysable capping silane compound as shown in the following exemplary reaction provided in formula (1):

pigment-OH + Xₙ-Si-Y→ pigment-O-Si-(Y)X₍ₙ₋₁₎ + HX (1)

where X is a hydrolysable group and Y is a capping group. The hydrolysable group can be, but is not limited to, alkoxy, e.g., methoxy or ethoxy, carbonyl and isocyanate. The capping group can be, but is not limited to, aryl, alkyl aryl, aryl or alkyl groups. Examples of such hydrolysable capping silane compounds include diethoxy dimethyl silane, ethoxy trimethyl silane, phenyl trimethoxy silane, diethoxy diphenyl silane and hexamethyl silane.

In one implementation, the capping silane is included in an amount sufficient to prevent agglomeration of the pigments by capping the bare hydroxyl groups that are present on the surface of the pigment. In one instance, the amount of the capping silane included is 1-10 weight percent based on the total weight of the organic layer.

With reference to Fig. 1C, in another embodiment, the coated pigment 27 includes the substrate 12, the first layer 15, the second layer 18, the third layer 25 and a fourth layer 29. In this embodiment, the substrate 12 is coated with the first layer 15, the first layer 15 is coated with the second layer 18, the second layer 18 is coated with the third layer 25 and the third layer 25 is coated with the fourth layer 29. In one example, the fourth layer 29 is the surface property modification layer and the third layer 25 is the encapsulation layer.

In yet other embodiments, the coated pigments 10, 22 and 27 do not include copper and/or zinc.

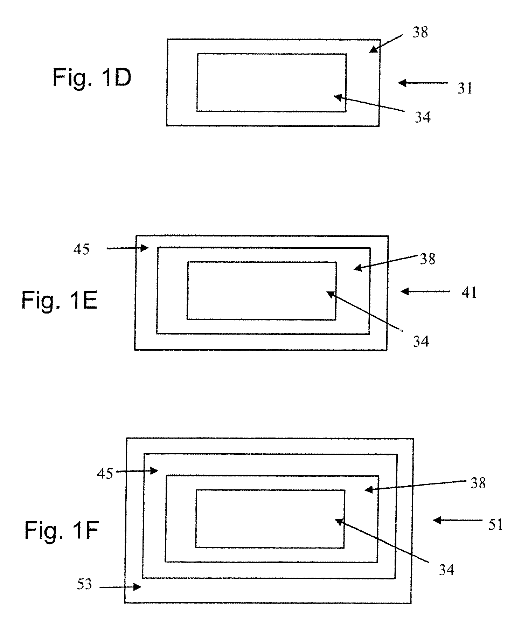

With reference to Fig. 1D, in another embodiment, a coated pigment 31 includes a substrate 34. The substrate 34 can have a thickness of less than 5 µm. In another example, the thickness is less than 1 µm. In yet another example, the substrate 34 can have an average diameter ranging from 1 µm to 500 µm. In yet another example, an average diameter ranges from 5 µm to 100 µm. The average diameter referred here is the D50 value measured via laser diffraction by means of suitable instruments. The diameter thickness of individual flakes can be measured using, for example, SEM. In this instance, the diameter is measured as viewed in cross-sectional top view of the substrate 34, and the thickness is measured as viewed in cross-sectional side view of the substrate 34.

The materials of the substrate 34 can be any material suitable for forming a coated pigment including, but not limited to, an inorganic substrate. The material of the inorganic substrate 34 can be, but not limited to, platelet-shaped materials such as metal or metal alloy flakes, and non-metallic flakes. In one implementation, the platelet-shaped materials are metal or metal alloys. In this instance, the metal or metal alloys provide high hiding power to the coated pigment 31. The term 'hiding power' herein means the coverage of the surface to be coated by the coated pigments measured using an optical transmittance densitomer. The metal or metal alloys that can be utilized include at least one of aluminum, zinc, iron, titanium, chromium, nickel, cobalt or alloys thereof.

In one example, aluminum is used as the substrate 34. In one instance, the aluminum substrate provides the coated pigment 31 with a strong metallic luster. In this instance, the coated pigment 31 has a low density.

In one example, the metallic luster of the substrate 34 can be tuned by using a substrate with a different shape. In one instance, the shape of the substrate 34 plays a role in the aesthetics of the coated pigment 31, due to light scattering that results from the edges of the coated pigment 31. In this instance, the smoother the edges of the coated pigment 31, the brighter the coated pigment 31. In one implementation, the substrate 34 is an aluminum pigments that is one of "corn flakes", "silver dollars", and "vacuum metalized flakes (VMF)". The term "corn flakes" herein means milled aluminum flakes with irregular shapes. The term "silver dollars" herein means milled aluminum flakes with regular round shapes. The term "VMF' herein means extremely thin aluminum flakes prepared by PVD process. In this example, by using a different type of aluminum flake, metallic luster of gold color nanoparticles coated pigments can be tuned.

In another example, stainless steel flakes are used as the substrate 34. In this example, substrate 34 has both excellent chemical resistance and metallic luster.

In another embodiment, the substrate 34 is a non-metallic platelet-shaped material. Examples of the non-metallic platelet-shaped material that can be used include mica, alumina flakes, borosilicate flakes and glass flakes.

In one implementation, the non-metallic platelet-shaped material included in the substrate 34 lacks hiding power, and is further coated with metal or metal oxide to provide hiding power to the substrate 34. In another implementation, the non-metallic platelet-shaped material included in the substrate 34 is further coated with metal or metal oxide to fine tune the color.

In other examples, the substrate 34 utilized is a chemical resistant substrate. In one example, the chemical resistant substrate 34 is a metallic substrate such as stainless steel flakes. In one instance, the stainless steel flakes has a grade of starting steel powder of 304. In another example, the chemical resistant substrate is non-metallic, such as mica, alumina flakes, borosilicate flakes and glass flakes.

The coated pigment 31 further includes a manganese oxide nanoparticles layer 38. In one instance, the manganese oxide nanoparticles layer 38 includes manganese oxide nanoparticles. In one embodiment, the manganese oxide nanoparticles layer 38 includes manganese oxide nanoparticle having particle size in a range from 10 to 100 nm. In another embodiment, the manganese oxide nanoparticles layer 38 includes manganese oxide nanoparticle having particle size in a range from 40 to 60 nm. In one example, the manganese oxide nanoparticles layer 38 has a narrow distribution of manganese oxide nanoparticle size of 50±10nm (measured by TEM) and a uniform nanoparticle deposition as observed with SEM at a magnification of ×25K before heat treatment to fuse the nanoparticles. An example of a uniform nanoparticle deposition over a substrate as observed with SEM at a magnification of ×25K before heat treatment to fuse the nanoparticles is shown in Fig. 2A. As shown in Fig. 2A, little or no substrate is observed. Fig. 3 shows another view of the example shown in Fig. 2A (observed with TEM at a magnification of ×100K). An example of a uniform nanoparticle deposition over a substrate as observed with SEM at a magnification of ×90K after heat treatment to fuse the nanoparticles is shown in Fig. 4A. Fig. 5 shows another view of the example shown in Fig. 4A (observed with TEM at a magnification of ×100K).

In one example, the oxide nanoparticles are included in the range of 0.1 to 100% by weight based on the weight of the starting substrate. The term `starting' herein means before the coating is applied onto the substrate. In another example, the amount of manganese oxide nanoparticles included is in the range of 1 to 50% by weight based on the weight of the starting substrate. In yet another example, the range is 1 to 30% by weight based on the weight of the starting substrate. In yet another example, the range is 1 to 20% by weight based on the weight of starting substrate.

In one embodiment, the manganese oxide nanoparticles are attached onto the surface of the substrate 34. In this embodiment, the manganese oxide nanoparticles are attached by anchoring groups that are present on the surface of the substrate 34. The anchoring groups utilized can be any functional groups that have physical and/or chemical affinity to colored nanoparticles. The anchoring groups include, but are not limited to, amine groups (including primary amine, secondary amine, tertiary amine, quaternary ammonium cation), phosphate esters, carboxylate groups, and conjugated molecules. Examples of the aminosilane that can be utilized include gamma-aminopropyl trimethoxysilane, gamma-aminopropyl triethoxysilane, N-(2-aminoethyl)-3-aminopropyltrimethoxysilane, gamma-(2-aminoethyl) aminopropylmethyldimethoxysilane, and the like which contains amino group in the chain and/or at the end of the chain.

In one example, the amount of the aminosilane included is in the range of 0.1 to 100% by weight based on the weight of the starting substrate. In another example, the amount of the aminosilane included is in the range of 1 to 50% by weight based on the weight of the starting substrate. In yet another example, the range is 1 to 20% by weight based on the weight of the starting substrate. In yet another example, the range is 1 to 10% by weight based on the weight of starting substrate.

With reference to Fig. 1E, in another embodiment, a coated pigment 41 includes the substrate 34, the manganese oxide nanoparticles layer 38 and a second layer 45. In this embodiment, the substrate 34 is coated with the manganese oxide nanoparticles layer 38 and the manganese oxide nanoparticles layer 38 is coated with the second layer 45. In one example, the second layer 45 is an encapsulation layer. In one instance, the encapsulation layer 45 includes an inorganic network that has one or more metal oxide components and an organic component. In one example, the organic component is an organic oligomer and/or polymer which is covalently bonded to the inorganic network via one or more organic network formers. In one instance, (TEOS) and bis-uresile silane are used to form the hybrid inorganic and organic hybrid layer by sol-gel method. In this example, the components is silica nanoparticles, and provides mechanical reinforcement. The organic component is urea groups of bis-ureasil structures and provides strong intermolecular hydrogen bonding, which results in excellent passivation properties.

In one instance, the encapsulation layer 45 can function as a barrier to aid in the binding of the coloring nanoparticle to the surface of the substrate 34, as well as improving the chemical resistance of the coated pigment 41.

In another example, the second layer 45 is a surface property modification layer. In one example, the surface property modification layer 45 includes a silane. In one instance, the silane is a fluorinated silane having a functional group bonded to a silicon atom, and the silane is covalently bonded to functional groups on the manganese oxide nanoparticles layer 38. In one example, the surface property modification layer can be used to functionalize the surface in order to achieve optimized compatibility with a coating or ink resins. In one implementation, the silane used can be (tridecafluoro-1,1,2,2-tetrahydrooctyl)-trimethoxylsilane and/or dodecyl trimethoxylsilane to increase the surface hydrophobicity. In another implementation, polyalkyleneoxide alkoxysilane (Silquest A-1230) can be used to increase the surface hydrophilicity. In yet another example, a mixture of hydrophobic and hydrophilic silanes can be applied to further tune the surface properties according to solubility parameters matching.

In one implementation, the surface of the second layer 45 is modified by reacting the second layer 45 with a hydrolysable capping silane compound as shown in the following exemplary reaction provided in formula (1):

pigment-OH + Xₙ-Si-Y → pigment-O-Si-(Y)X₍ₙ₋₁₎ + HX (1)

where X is a hydrolysable group and Y is a capping group. The hydrolysable group can be, but is not limited to, alkoxy, e.g., methoxy or ethoxy, carbonyl and isocyanate. The capping group can be, but is not limited to, aryl, alkyl aryl, aryl or alkyl groups. Examples of such hydrolysable capping silane compounds include diethoxy dimethyl silane, ethoxy trimethyl silane, phenyl trimethoxy silane, diethoxy diphenyl silane and hexamethyl silane.

In one implementation, the capping silane is included in an amount sufficient to present agglomeration of the pigments by capping the bare hydroxyl groups that are present on the surface of the pigment. In one instance, the amount of the capping included is 1-10 weight percent based on the total weight of the organic layer.

With reference to Fig. 1F, in another embodiment, a coated pigment 51 includes the substrate 34, the manganese oxide nanoparticles layer 38, the second layer 45 and a third layer 53. In this embodiment, the substrate 34 is coated with the manganese oxide nanoparticles layer 38, the manganese oxide nanoparticles layer 38 is coated with the second layer 45 and the second layer 45 is coated with the third layer 53. In one example, the third layer 53 is the surface property modification layer and the second layer 45 is the encapsulation layer.

In yet other embodiments, the coated pigments 31,41 and 51 do not include copper and/or zinc.

The method of producing the coated pigments 10, 22 and 27, will now be described. In one embodiment, metal oxides are deposited on the substrate 12 by redox deposition so as to provide a metal oxides passivation layer 15 that surrounds the surface of the substrate 12. In one example, aluminum is used as the substrate 12. In this example, the redox deposition is carried out by depositing chromium (+3) oxide on the aluminum substrate 12 via the decomposition of chromate (+7) salts.

In another embodiment, metal oxides are deposited on the substrate 12 by controlled hydrolysis of metal acid esters in organic solvents by means of sol-gel process so as to provide a metal oxides passivation layer 15 that surrounds the surface of the substrate 12. Metal acid esters that can be used to deposit the metal oxides can be, but are not limited to, alkyl and aryl alcoholates, carboxylates, alkyl alcoholates or carboxylates, substituted with carboxyl residues or alkyl residues or aryl residues, of titanium, zirconium, silicon, aluminium and boron. In other examples, metal acid esters that can be used are alkyl and aryl alcoholates, in particular C1-C6 alkyl alcoholates such as methanolates, ethanolates, n-propanolates, i-propanolates, n-butanolates, i-butanolates and t-butanolates of the stated metals. These compounds have the general formula of M(OR)y, where M is titanium, zirconium, vanadium, silicon, aluminium or boron, R is a C1-C6 alkyl, phenyl, xylyl, tolyl or cresyl group, and y is 3 or 4. M(OR)y can also be considered as an ester of the metal acids, for example, ortho-silicic acid, boric acid, aluminium hydroxide, titanic acid or zirconic acid. In some instances, aluminium triisopropylate (triisopropylaluminate), titanium tetraisopropylate (tetraisopropytitanate), polymeric n-butyltitanate, titanium (tetraisobutyltitanate), zirconium tetraisopropylate (tetraisopropylzirconate), ortha-siticic acid tetraethyl ester (tetraethyl orthosilicate) and trimethylborate (boric acid trimethylester) can be used. In other instances, acetyl acetonates, acetoacetylacetonates, substituted by alkyl or alkenyl residues, or acetoacetates of the stated metals can be used. In other instances, zirconium, aluminium or titanium acetylacetonate (Zr(ACAC)4, Ti(ACAC)4 or Al(ACAC)3) and diisobutyloleylacetoacetylaluminate or diisopropyloleylacetoacetylacetonate can be used.

In other examples, mixtures of different metal oxide precursors which will result in the deposition of mixed metal oxide layers on the substrates can be used. In one example, mixed zirconium oxide and silica passivation layer can be deposited by a sol-gel process by controlling the kinetics of hydrolysis and condensation of mixed precursors. The combined zirconia and silica films have a synergetic effect, which yields a passivation effect that is superior to either of the individual components.

In another embodiment, the polymer passivation layer 15 is provided by a "graft to" or "graft from" scheme. In the "graft to" scheme, an initiator or monomer is attached to the substrate firstly via covalent or physical bonding, followed by polymerization of the monomers so as to produce a polymeric chain. In the "graft from" scheme, the polymer is prepared first with suitable end anchoring groups. The polymers are then attached onto the substrate via covalent or physical bonding.

To securely bind colored nanoparticle onto the first layer 15, the disclosed method involves immobilizing anchoring functional groups onto the surface of the first layer 15 using surface active groups. In one example, a coupling reagent that includes anchoring groups is used to functionalize pigment surfaces with anchoring groups. In one instance, the coupling reagent has a chemical structure X-R-Y, where X denotes a surface active group, Y denotes anchoring groups, and R denotes a spacer. The anchoring groups are bound to the surface of the first layer 15 upon the reaction between surface active groups and functional groups that are present on the surface of the first layer 15. In one instance, the functional groups on the surface of the first layer 15 are hydroxyl groups.

The surface active group X can be, but is not limited to, silanes (including any of mono-, di-, and tri-alkoxylsilanes, and mono-, di- and trichlorosilanes), titanates, zirconates, and aluminates. In one example, the surface active groups form covalent bonds with the functional groups on the surface of the first layer 15 and anchor the coupling molecules onto the surfaces. In the example of trialkoxysilane and trichlorosilane, the intermolecular condensation among organosilane molecules leads to the formation of a high density coating of such molecules. The term "high density" herein means that the anchoring groups Y substantially cover the surface of the first layer 15 as measured by thermal gravimetric analysis and/or elemental analysis.

Anchoring groups Y can be any functional groups that have physical and/or chemical affinity to colored nanoparticles, including, but not limited to, amine groups (including primary amine, secondary amine, tertiary amine, quaternary ammonium cation), phosphate esters, carboxylate groups, and conjugated molecules. Examples of the aminosilane that can be utilized include gamma-aminopropyl trimethoxysilane, gamma-aminopropyl triethoxysilane, N-(2-aminoethyl)-3-aminopropyltrimethoxysilane, gamma-(2-aminoethyl)aminopropylmethyldimethoxysilane, and the like which contains amino group in the chain and/or at the end of the chain. In one example, the amount of the aminosilane included is in the range of 0.1 to 100% by weight based on the weight of starting substrate. In another example, the amount of the aminosilane included is in the range of 1 to 50% by weight based on the weight of starting substrate. In yet another example, the amount of the aminosilane included is in the range of 1 to 20% by weight based on the weight of starting substrate. In yet another example, the amount of the aminosilane included is in the range of 1 to 10% by weight based on the weight of starting substrate.

In another embodiment, providing the manganese oxide nanoparticles layer 18 involves synthesizing the manganese oxide nanoparticles by in-situ redox reaction between alkali metal permanganate aqueous solution and alcohols at room temperature. In this instance, manganese in permanganate ion has a valence state of +7, which is used an oxidizing agent. Manganese readily oxidizes alcohol into carboxylic acid and/or ketone, while the manganese itself is reduced to manganese oxide (Mn(+4)O₂) X-ray photoelectron spectroscopic (XPS) studies can be performed to evaluate the oxidation state of Mn in the prepared materials. According to literature, the Mn3s spectra in manganese oxides exhibit a splitting due to the parallel spin coupling between the 3s electron and the 3d electron during the photoelectron ejection. The difference in the binding energy (BE) gives important information on the oxidation state of Mn in the prepared manganese oxide nanoparticles. The BE difference values close to 4.8 eV signifies the oxidation of Mn in 4+ state, while the BE difference for Mn (+3) in the Mn3s spectra will be close to 5.4 eV. In one example, according to XPS measurement of produced manganese oxide nanoparticles, the BE difference is about 4.9 eV, indicating that manganese is in 4+ state in the nanoparticles. In this example, the resulting manganese oxide nanoparticles are 10-100 nm in diameter. In one instance, they can be added in amount sufficient to produce a commonly accepted CIE L*a*b values in the art for real gold color, which are (5, 35). In another instance, the manganese oxide nanoparticles can be attached onto the surface of the first layer 15. In this instance, the surface of the first layer 15 has an amine or other anchoring groups.

In one example, the manganese oxide nanoparticle deposition is a first order reaction. In this example, the reaction kinetics can be controlled readily by the concentration of permanganate aqueous solution. In this instance, narrow distribution particle size and uniform nanoparticles deposition onto the substrate can be achieved.

In another example, the loading of manganese oxide nanoparticles can be controlled based on weight of the substrate 12. In this example, various gold color shades can be achieved by adjusting the loading of the manganese oxide nanoparticle. In one instance of this example, the amount of manganese oxide nanoparticles included can be in the range of 0.1 to 100% by weight based on the weight of starting substrate. In another instance, the amount of manganese oxide nanoparticles included is in the range of 1 to 50% by weight based on the weight of starting substrate. In yet another instance, the range is 1 to 30% by weight based on the weight of starting substrate. In yet another instance, the range is 1 to 20% by weight based on the weight of starting substrate.

The alkali metal permanganate that can be used in the in-situ redox reaction includes, but is not limited to, lithium permanganate, sodium permanganate, and potassium permanganate. The alcohol that can be used in the in-situ redox reaction includes, but is not limited to ethanol, methanol, pentanol, isopropanol, glycerol, ethylene glycol, and propylene glycol methyl ether.

In one occurrence, the manganese oxide nanoparticles are partially hydrated as they are deposited in aqueous solution. In this occurrence, the manganese oxide nanoparticles can be heated in an oven at 100-500°C for 1-10 hours. This heat treatment process can fuse manganese oxide nanoparticles into a continuous coating layer, which is evidenced by TEM images at x100K or higher (Fig. 5).

In another embodiment, the manganese oxide nanoparticle coated flakes is further encapsulated with metal oxide or polymer layer in a similar fashion to that of the passivation layer 15 described above. In one example, the encapsulation layer 25 is used as a barrier for further securing the manganese oxide nanoparticle binding to the surface of the first layer 15, as well as improving the chemical resistance of the coated pigments 10, 22 and 29.

In another embodiment, silanes can be applied on the surface of the encapsulation layer 25 or on top of the manganese oxide nanoparticle layer 18 so as to functionalize the surface. In one example, the applied silanes help to optimized compatibility with intended coating or ink resins. In one instance, (tridecafluoro-1,1,2,2-tetrahydrooetyl)-trimethoxylsilane or dodecyl trimethoxylsilane are applied to increase the surface hydrophobicity. In another instance polyalkyleneoxide alkoxysilane (Silquest A-1230) are applied to increase the surface hydrophilicity. A mixture of hydrophobic and hydrophilic silanes also can be applied as well to further tune the surface properties. During the silane treatment, extra silanol groups are capped off with diethoxydimethylsilane to avoid unwanted complexity.

The method of producing the coated pigments 31, 41 and 51 will now be described. In one embodiment, manganese oxide nanoparticles are attached to the substrate 34 so as to form the manganese oxide nanoparticles layer 38. To securely bind the manganese oxide nanoparticles onto the substrate 34, the disclosed method involves immobilizing anchoring functional groups onto the surface of the substrate 34 using surface active groups. In one example, a coupling reagent that includes anchoring groups is used to functionalize pigment surfaces with anchoring groups. In one instance, the coupling reagent has a chemical structure X-R-Y, where X denotes a surface active group, Y denotes anchoring groups, and R denotes a spacer. The anchoring groups are bound to the surface of the substrate 34 upon the reaction between surface active groups and functional groups that are present on the surface of substrate 34. In one instance, the functional groups on the surface of the substrate 34 are hydroxyl groups.

The surface active group X can be, but is not limited to, silanes (including any of mono-, di-, and tri-alkoxylsilanes, and mono-, di- and trichlorosilanes), titanates, zirconates, and aluminates. In one example, the surface active groups form covalent bonds with the functional groups on the surface of the substrate 34 and anchor the coupling molecules onto the surfaces. In the example of trialkoxysilane and trichlorosilane, the intermolecular condensation among organosilane molecules leads to the formation of a high density coating of such molecules. The term "high density" herein means that the anchoring groups Y substantially cover the surface of the substrate 34 as measured by thermal gravimetric analysis and/or elemental analysis.

Anchoring groups Y can be any functional groups that have physical and/or chemical affinity to colored nanoparticles, including, but not limited to, amine groups (including primary amine, secondary amine, tertiary amine, quaternary ammonium cation), phosphate esters, carboxylate groups, and conjugated molecules. Examples of the aminosilane that can be utilized include gamma-aminopropyl trimethoxysilane, gamma-aminopropyl triethoxysilane, N-(2-aminoethyl)-3-aminopropyltrimethoxysilane, gamma-(2-aminoethyl)aminapropylmethyldimethaxysilane, and the like which contains amino group in the chain and/or at the end of the chain. In one example, the amount of the aminosilane included is in the range of 0.1 to 100% by weight based on the weight of starting substrate. In another example, the amount of the aminosilane included is in the range of 1 to 50% by weight based on the weight of starting substrate. In yet another example, the amount of the aminosilane included is in the range of 1 to 20% by weight based on the weight of starting substrate. In yet another example, the amount of the aminosilane included is in the range of 1 to 10% by weight based on the weight of starting substrate.

In another embodiment, providing the manganese oxide nanoparticles layer 38 involves synthesizing the manganese oxide nanoparticles by in-situ redox reaction between alkali metal permanganate aqueous solution and alcohols at room temperature. In this instance, manganese in permanganate ion has a valence state of +7, which is used an oxidizing agent. Manganese readily oxidizes alcohol into carboxylic acid and/or ketone, while the manganese itself is reduced to manganese oxide (Mn(+4)O₂) X-ray photoelectron spectroscopic (XPS) studies can be performed to evaluate the oxidation state of Mn in the prepared materials. According to literature, the Mn3s spectra in manganese oxides exhibit a splitting due to the parallel spin coupling between the 3s electron and the 3d electron during the photoelectron ejection. The difference in the binding energy (BE) gives important information on the oxidation or Mn in the prepared manganese oxide nanoparticles. The BE difference values close to 4.8 eV signifies the oxidation of Mn in 4+ state, while the BE difference far Mn (+3) in the Mn3s spectra will be close to 5.4 eV. In one example, according to XPS measurement of produced manganese oxide nanoparticles, the BE difference is about 4.9 eV, indicating that manganese is in 4+ state in the nanoparticles. In this example, the resulting manganese oxide nanoparticles are 10-100 nm in diameter. In one instance, they can be added in amount sufficient to produce a commonly accepted CIE L*a*b values in the art for real gold color, which are (5, 35). In another instance, the manganese oxide nanoparticles can be attached onto the surface of the substrate 34. In this instance, the surface of the substrate 34 has an amine or other anchoring groups.

In one example, the manganese oxide nanoparticle deposition is a first order reaction. In this example, the reaction kinetics can be controlled readily by the concentration of permanganate aqueous solution. In this instance, narrow distribution particle size and uniform nanoparticles deposition onto the substrate can be achieved.

In another example, the loading of manganese oxide nanoparticles can be controlled based on weight of the substrate 34. In this example, various gold color shades can be achieved by adjusting the loading of the manganese oxide nanoparticle. In one instance of this example, the amount of manganese oxide nanoparticles included can be in the range of 0.1 to 100% by weight based on the weight of starting substrate. In another instance, the amount of manganese oxide nanoparticles included is in the range of 1 to 50% by weight based on the weight of starting substrate. In yet another instance, the range is 1 to 30% by weight based on the weight of starting substrate. In yet another instance, the range is 1 to 20% by weight based on the weight of starting substrate.

The alkali metal permanganate that can be used in the in-situ redox reaction includes, but is not limited to, lithium permanganate, sodium permanganate, and potassium permanganate. The alcohol that can be used in the in-situ redox reaction includes, but is not limited to ethanol, methanol, pentanol, isopropanol, glycerol, ethylene glycol, and propylene glycol methyl ether.

In one occurrence, the manganese oxide nanoparticles are partially hydrated as they are deposited in aqueous solution. In this occurrence, the manganese oxide nanoparticles can be heated in an oven at 100-500°C for 1-10 hours. This heat treatment process can fuse manganese oxide nanoparticles into a continuous coating layer, which is evidenced by TEM images at x100K or higher magnification (Fig. 5).

In another embodiment, the manganese oxide nanoparticle coated flakes is further encapsulated with metal oxide or polymer so as to form the encapsulation layer 45. The metal oxides are deposited the manganese oxide nanoparticles layer 38 by redox deposition so as to provide the encapsulation layer 45 that surrounds the surface of the manganese oxide nanoparticles layer 38.

In another embodiment, metal oxides are deposited on the manganese oxide nanoparticles layer 38 by controlled hydrolysis of metal acid esters in organic solvents by means of sol-gel process so as to provide the encapsulation layer 45 that surrounds the surface of the manganese oxide nanoparticles layer 38. Metal acid esters that can be used to deposit the metal oxides can be, but are not limited to, alkyl and aryl alcoholates, carboxylates, alkyl alcoholates or carboxylates, substituted with carboxyl residues or alkyl residues or aryl residues, of titanium, zirconium, silicon, aluminium and boron. In other examples, metal acid esters that can be used are alkyl and aryl alcoholates, in particular C1-C6 alkyl alcoholates such as methanolates, ethanolates, n-propanolates, i-propanolates, n-butanolates, i-butanolates and t-butanolates of the stated metals. These compounds have the general formula of M(OR)y, where M is titanium, zirconium, vanadium, silicon, aluminium or boron, R is a C1-C6 alkyl, phenyl, xylyl, tolyl or cresyl group, and y is 3 or 4. M(OR)y can also be considered as an ester of the metal acids, for example, ortho-silicic acid, boric acid, aluminium hydroxide, titanic acid or zirconic acid. In some instances, aluminium triisopropylate (triisopropylaluminate), titanium tetraisopropylate (tetraisopropyltitanate), polymeric n-butyltitanate, titanium tetraisobutylate (tetraisobutyltitanate), zirconium tetraisopropylate (tetraisopropylzirconate), ortha-silicic acid tetraethyl ester (tetraethyl orthosilicate) and trimethylborate (boric acid trimethylester) can be used. In other instances, acetyl acetonates, acetoacetylacetonates, substituted by alkyl or alkenyl residues, or acetoacetates of the stated metals can be used. In other instances, zirconium, aluminium or titanium acetylacetonate (Zr(ACAC)4, Ti(ACAC)4 or A1(ACAC)3) and diisobutyloleylacetoacetylaluminate or diisopropyloleylacetoacetylacetonate can be used.

In other examples, mixtures of different metal oxide precursors which will result in the deposition of mixed metal oxide layers on the substrates can be used. In one example, mixed zirconium oxide and silica passivation layer can be deposited by a sol-gel process by controlling the kinetics of hydrolysis and condensation of mixed precursors. The combined zirconia and silica films have a synergetic effect, which yields a passivation effect that is superior to either of the individual components.

In another embodiment, the polymer passivation layer 45 is provided by a "graft to" or "graft from" scheme. In the "graft to" scheme, an initiator or monomer is attached to the substrate firstly via covalent or physical bonding, followed by polymerization of the monomers so as to produce a polymeric chain. In the "graft from" scheme, the polymer is prepared first with suitable end anchoring groups. The polymers are then attached onto the substrate via covalent or physical bonding.

In one example, the encapsulation layer 45 is used as a barrier for further securing the manganese oxide nanoparticle binding to the surface of the substrate 34, as well as improving the chemical resistance of the coated pigments 31, 41 and 51.

In another embodiment, silanes can be applied on the surface of the encapsulation layer 45 or on top of the manganese oxide nanoparticle layer 38 so as to functionalize the surface. In one example, the applied silanes help to optimize compatibility with intended coating or ink resins. In one instance, (tridecafluoro-1,1,2,2-tetrahydrooctyl)-trimethoxylsilane or dodecyl trimethoxylsilane are applied to increase the surface hydrophobicity. In another instance polyalkyleneoxide alkoxysilane (Silquest A-1230) are applied to increase the surface hydrophilicity. A mixture of hydrophobic and hydrophilic silanes also can be applied as well to further tune the surface properties. During the silane treatment, extra silanol groups are capped off with diethoxydimethylsilane to avoid unwanted complexity.

### EXAMPLES

### Example 1:

### Step 1 Silica passivation:

To a 2 L reaction flask equipped with a stirrer and a condenser, the following chemicals were added:
1. 133g aluminum flakes (Sparkle Silver® Premium 695, 100g aluminum metal equivalent) 600g propylene glycol methyl ether
2. 30g tetraethyl orthosilicate
3. 20ml 28% ammonia aqueous solution
The mixture was kept stirring at 85°C for 6 hours. Once the reaction time was completed, the mixture was vacuum filtered, and washed with propylene glycol methyl ether.

### Step 2 Aminosilane anchoring groups immobilization:

To a 2 L reaction flask, the following chemicals were added:
1. 125g silica passivated aluminum flakes (90g aluminum metal equivalent)
2. 500g propylene glycol methyl ether
3. 20mL N-[3-(trimethoxylsilyl) propyl]-ethylenediamine
4. 20mL de-ionized water
The mixture was kept stirring at 25°C for 2 hours. Once the reaction time was completed, the mixture was filtered, and washed with propylene glycol methyl ether.

### Step 3 ManO₂ nanoparticles deposition:

To a 2 L reaction flask, the following chemicals were added:
1. 186g silica passivated aluminum flakes (90g aluminum metal equivalent)
2. 500g propylene glycol methyl ether
16g KMnO₄ (9 g MnO₂ equivalent, 10% to aluminum metal) was dissolved in 1000g de-ionized water, and was added into the slurry dropwise over 1 hour.
The mixture was kept stirring at 25°C for another 0.5 hour. Once the reaction time was completed, the mixture was filtered, and washed with propylene glycol methyl ether.

### Comparison Example (Without amino anchoring group):

### Step 1 Silica passivation:

To a 2 L reaction flask equipped with a stirrer and a condenser, the following chemicals were added:
1. 133g aluminum flakes (Sparkle Silver® Premium 695, 100g aluminum metal equivalent) 600g propylene glycol methyl ether
2. 30g tetraethyl orthosilicate
3. 20ml 28% ammonia solution
The mixture was kept stirring at 85°C for 6 hours. Once the reaction time was completed, the mixture was vacuum filtered, and washed with propylene glycol methyl ether.

### Step 2 MnO₂ nanoparticles deposition:

To a 2 L reaction flask, the following chemicals were added:
1. 186g silica passivated aluminum flakes (90g aluminum metal equivalent)
2. 500g propylene glycol methyl ether
16g KMnO₄ (9 g MnO₂ equivalent, 10% to aluminum metal) was dissolved in 1000g de-ionized water, and was added into the slurry dropwise over 1 hour.
The mixture was kept stirring at 25°C for another 0.5 hour. Once the reaction time was completed, the mixture was filtered, and washed with propylene glycol methyl ether.

### Evaluation of gold color metallic pigments - Nitrocellulose ink drawdown

To evaluate the color of pigments obtained, in each case 1 g of pigment sample was mixed with nitrocellulose in isopropyl acetate having a solid content 20% by weight and dispersed for 30 second in the Speedmixer (DAC 150 FVZ-K) from FlackTeck Inc. A drawdown bar (# 14) was used to prepare drawdowns of the pigmented varnish on a piece of black and white ink cardboard. After the film had dried at room temperature, CIE L*a*b values were measured with a X-rite MA68II Multi-angle Spectrophotometer at an angle difference of 15°, 25°, 45°, 75°, 110°. The reported color coordinates (L, a*, b*) related to the standard illuminate D65 and a viewing angle of 10°. L is the lightness, a* is the red/green content and b* is the blue/yellow content. The measurements were carried out on single drawdowns over a white background as shown in Table 1.

**Table 1**

| Example 1 (Measuring angle) | L | a* | b* |
|---|---|---|---|
| 15° | 151.5 | 0.5 | 24.3 |
| 25° | 109.9 | -0.4 | 19.4 |
| 45° | 53.2 | -0.3 | 10.0 |
| 75° | 28.6 | -0.2 | 6.5 |
| 110° | 22.9 | 0.6 | 8.2 |

| Comparison example (Measuring angle) | L | a* | b* |
|---|---|---|---|
| 15° | 159.8 | -1.5 | 17.9 |
| 25° | 112.6 | -1.9 | 14.8 |
| 45° | 51.0 | -0.5 | 9.5 |
| 75° | 24.5 | 0.1 | 7.9 |
| 110° | 20.3 | 0.5 | 9.1 |

### Example 2:

### Step 1 Silica passivation:

To a 2 L reaction flask equipped with a stirrer and a condenser, the following chemicals were added:
1. 133g aluminum flakes (Sparkle Silver® Premium 695, 100g aluminum metal equivalent) 600g propylene glycol methyl ether
2. 30g tetraethyl orthosilicate
3. 20ml 28% ammonia aqueous solution
The mixture was kept stirring at 85°C for 6 hours. Once the reaction time was completed, the mixture was vacuum filtered and washed with propylene glycol methyl ether.

### Step 2 Aminosilane anchoring groups immobilization:

To a 2 L reaction flask, the following chemicals were added:
1. 125g silica passivated aluminum flakes (90g aluminum metal equivalent)
2. 500g propylene glycol methyl ether
3. 20mL N-[3-(trimethoxylsilyl) propyl]-ethylenediamine
4. 20mL de-ionized water
The mixture was kept stirring at 25°C for 2 hours. Once the reaction time was completed, the mixture was filtered, and washed with propylene glycol methyl ether.

### Step 3 MnO₂ nanoparticles deposition:

To a 2 L reaction flask, the following chemicals were added:
1. 186g silica passivated aluminum flakes (90g aluminum metal equivalent)
2. 500g propylene glycol methyl ether
32g KMn0₄ (17.6 g MnO₂ equivalent, 20% to aluminum metal) was dissolved in 1000g deionized water, and was added into the slurry dropwise over 1 hour.
The mixture was kept stirring at 25°C for another 0.5 hour. Once the reaction time was completed, the mixture was filtered, and washed with propylene glycol methyl ether. The color of gold color metallic pigment was evaluated in nitrocellulose ink drawdown, as shown in Table 2.

**Table 2**

| Example 2 (Measuring angle) | L | a* | b* |
|---|---|---|---|
| 15° | 138.2 | 0.47 | 44.3 |
| 25° | 93.4 | 0.15 | 34.0 |
| 45° | 39.3 | 1.05 | 18.5 |
| 75° | 17.1 | 1.84 | 12.4 |
| 110° | 13.5 | 2.63 | 12.1 |

### Example 3

Gold color metallic pigments prepared by Example 2 were dried in oven to remove solvent. Then 50g pigments were loaded into an alumina crucible and inserted in a tube furnace (Lindberg/Blue M). The furnace was heated with the following heating profile:
1. Ramp to 250°C in 1 hour
2. Keep at 250°C for 2 hours
3. Cool to 25°C in 1 hour
After the furnace was cooled, gold color metallic pigments with brilliant metallic color were collected.
The color of gold color metallic pigments was evaluated in nitrocellulose ink drawdown, as shown in Table 3.

**Table 3**

| Example 3 (Measuring angle) | L | a* | b* |
|---|---|---|---|
| 15° | 127.3 | 2.4 | 45.4 |
| 25° | 90.7 | 2.0 | 36.8 |
| 45° | 41.9 | 1.9 | 20.9 |
| 75° | 19.5 | 2.4 | 13.0 |
| 110° | 15.7 | 3.1 | 12.6 |

### Example 4:

To a 2 L reaction flask equipped with a stirrer and a condenser. the following chemicals were added:
1. 96g gold color metallic pigments prepared by Example 2 (50g solid, 39g aluminum metal equivalent)
2. 250g propylene glycol methyl ether
3. 8g tetraethyl orthosilicate
4. 4ml 28% ammonia solution
The mixture was kept stirring at 85°C for 6 hours. Once the reaction time was completed, the mixture was vacuum filtered, and washed with propylene glycol methyl ether.

### Example 5:

Gold color metallic pigments prepared by Example 4 were dried in oven to remove solvent. Then 50g pigments were loaded into an alumina crucible and inserted in a tube furnace (Lindberg/Blue M). The furnace was heated with the following heating profile:
1. Ramp to 250°C in 1 hour
2. Keep at 250°C for 2 hours
3. Cool to 25°C in 1 hour
After the furnace was cooled, gold pigments with brilliant metallic color were collected.

### Example 6:

### Step 1 Borosilicate passivation:

To a 1L beaker equipped with a stirrer, the following chemicals were added in order:
1. 10 ml deionized water (0.6 mol)
2. 0.58my 85 wt% phosphate acid (0.98g, 0.01mol)
3. 7.5ml dimethyl formamide (0.096mol)
4. 70ml ethanol (1.2 mol)
5. 41ml tetraethyl orthosilicate (0.185mol)
After 30 mins, 13 ml trimethylborate was added into the mixture. Total equivalent weight of silica and boron oxide is 19.4g. The mixture was then stirred for another hour. In another 1 L reaction flask equipped with a stirrer and condensor, 133g aluminum flakes (Sparkle Silver® Premium 695, 100g aluminum metal equivalent) were dispersed in 750ml propylene glycol methyl ether and stirred for 15 mins. Then borosilicate glass precursor solution was slowly added to aluminum flakes dispersion solution. The mixture was heated to 60°C and kept stirring for 16 hours. Once the reaction time was completed, the mixture vacuum filtered, and washed with propylene glycol methyl ether.

### Step 2 Aminosilane anchoring groups immobilization:

To a 1L reaction flask, the following chemicals were added:
5. 125g borosilica passivated aluminum flakes (90g aluminum metal equivalent)
6. 500g propylene glycol methyl ether
7. 20mL N-[3-(trimethoxylsilyl) propyl]-ethylenediamine
8. 20mL de-ionized water
The mixture was kept stirring at 25°C for 2 hours. Once the reaction time was completed, the mixture was filtered, and washed with propylene glycol methyl ether.

### Step 3 MnO₂ nanoparticles deposition:

To a 2 L reaction flask, the following chemicals were added:
3. 186g silica passivated aluminum flakes (90g aluminum metal equivalent)
4. 500g propylene glycol methyl ether
32g KMn0₄ (17.6 g MnO₂ equivalent, 20% to aluminum metal) was dissolved in 1000g deionized water, and was added into the slurry dropwise over 1 hour.
The mixture was kept stirring at 25°C for another 0.5 hour. Once the reaction time was completed, the mixture was filtered, and washed with propylene glycol methyl ether.

### Example 7

To a 1 L reaction flask equipped with a stirrer and a condenser, the following chemicals were added:
1. 10g gold color metallic pigments prepared by Example 3
2. 400ml 1-methoxy-2-propanol acetate
3. 0.5g (tridecafluoro-1,1,2,2-tetrahydrooctyl)-trimethoxylsilane
The mixture was kept stirring at 85°C for 6 hours. Once the reaction time was complete, the mixture was vacuum filtered, and washed with 1-methoxy-2-propanol acetate.

### Example 8

To a 1L reaction flask equipped with a stirrer and a condenser, the following chemicals were added:
4. 10g color metallic pigments prepared by Example 3
5. 400ml 1-methoxy-2-propanol acetate
6. 0.5g dodecyl trimethoxylsilane
The mixture was kept stirring at 85°C or 6 hours. Once the reaction time was complete, the mixture was vacuum filtered, and with l-methoxy-2-propanol acetate.

### Example 9

To a 1 L reaction flask with a stirrer and a condenser, the following chemicals were added:
7. 10g gold color metallic pigments prepared by Example 3
8. 400ml 1-methoxy-2-propanol acetate
9. 0.5g diethoxydimethylsilane
The mixture was kept stirring at 85°C for 6 hours. Once the reaction time was complete, the mixture was vacuum filtered, and washed with 1-methoxy-2-propanol acetate.

While the disclosed coated pigments and have been described in conjunction with a preferred embodiment, it will be apparent to one skilled in the art that other objects and refinements of the disclosed coated pigments and methods may be made within the overview and scope of the disclosure.

The disclosure, in its various aspects and disclosed forms, is well adapted to the attainment of the stated objects and advantages of others. The disclosed details are not to be taken as limitations on the claims.

## Claims

1. A coated pigment, comprising:
a substrate having an anchoring group; and
a manganese oxide nanoparticles layer that includes manganese oxide nanoparticles,
wherein the manganese oxide nanoparticles are included in an amount sufficient to produce a gold metallic color, and
the manganese oxide nanoparticles are attached to the substrate by the anchoring group.

2. The coated pigment of claim 1, wherein the amount of manganese oxide nanoparticles is in the range of 0.1 to 100% by weight based on the weight of the substrate.

3. The coated pigment of claim 1 or claim 2, wherein the manganese oxide nanoparticles layer has a narrow distribution of nanoparticle size and a uniform deposition.

4. The coated pigment of claim 3, wherein the manganese oxide nanoparticles have a particle size in the range from 10 to100 nm.

5. The coated pigment of one of claims 1 to 4, wherein the coated pigment further includes a passivation layer, and the anchoring group is provided on the surface of the passivation layer.

6. The coated pigment of claim 5, wherein the passivation layer includes at least one selected from the group consisting of metal oxides, mixed metal oxides, polymers, and hybrid polymer nanocomposites.

7. The coated pigment of one of claims 1 to 6, wherein the coated pigment further includes an encapsulation layer.

8. The coated pigment of one of claims 1 to 7, wherein the coated pigment further includes a surface property modification layer.

9. The coated pigment of one of claims 1 to 8, wherein the substrate is metallic and is at least one selected from the group consisting of aluminum, zinc, iron, titanium, chromium, nickel, cobalt or alloys thereof.

10. The coated pigment of one of claims I to 9, wherein the substrate is non-metallic and is at least one selected from the group consisting of mica, alumina flakes, borosilicate flakes and glass flakes.

11. A method of producing a coated pigment in accordance with any of claims 1-10, comprising: functionalizing the surface of the substrate or the passivation layer using a coupling reagent.

12. The method of claim 11, wherein the coupling reagent has a chemical structure with the following formula (1):
X-R-Y (1)
where X is a surface active group, Y is the anchoring group and R is a spacer.

13. The method of claim 12, wherein X is at least one selected from the group consisting of silanes, titanates, zirconates, and aluminates, and Y is at least one selected from the group consisting of amine groups, phosphate esters, carboxylate groups, and conjugated molecules.

14. A method of producing a coated pigment in accordance with any of claims 1-10, comprising: synthesizing the manganese oxide nanoparticles by conducting an in-situ redox reaction between alkali metal permanganate aqueous solution and alcohols,
wherein the loading of the oxides nanoparticles is controlled based on the weight of the substrate, and
wherein adjusting the amount of of the manganese oxide nanoparticle provides gold color shades.

15. A system, comprising: a coated pigment in accordance with any of claims 1-10, wherein the system is at least one selected from the group consisting of a paint system, a varnish system and an ink system.
